## Europäisches Patentamt

## European Patent Office

## Office européen des brevets

(19)

(11) Veröffentlichungsnummer : **0 441 870 B1**

# (12) EUROPÄISCHE PATENTSCHRIFT

(45) Veröffentlichungstag der Patentschrift :
**24.03.93 Patentblatt 93/12**

(21) Anmeldenummer : **89912793.0**

(22) Anmeldetag : **02.11.89**

(86) Internationale Anmeldenummer :
**PCT/EP89/01310**

(87) Internationale Veröffentlichungsnummer :
**WO 90/05386 17.05.90 Gazette 90/11**

(51) Int. Cl.⁵ : **H01M 4/02**, H01M 4/58,
H01M 10/39

(54) AKKUMULATOR UND VERFAHREN ZU SEINER HERSTELLUNG.

(30) Priorität : **07.11.88 DE 3837721**

(43) Veröffentlichungstag der Anmeldung :
**21.08.91 Patentblatt 91/34**

(45) Bekanntmachung des Hinweises auf die
Patenterteilung :
**24.03.93 Patentblatt 93/12**

(84) Benannte Vertragsstaaten :
**DE FR GB**

(56) Entgegenhaltungen :
**FR-A- 2 262 412**
**FR-A- 2 301 108**
**FR-A- 2 423 873**
**FR-A- 2 469 013**
**FR-A- 2 518 320**
**US-A- 4 367 159**

(56) Entgegenhaltungen :
**Journal of Power Sources, Vol. 18, No. 4,**
**November 1986, Elsevier Sequoia, Lausanne**
**CH, pages 377-380; J. Coetzer: "A new high**
**energy density battery system" see page 377,**
**last paragraph - page 378**
**Patent Abstracts of Japan, vol. 6, No. 9**
**(E-90)(887) 20 January 1982, & JP-A-56 130080**
**(Matsushita Denki Sangyo K.K.) 12 October**
**1981, see the whole document**

(73) Patentinhaber : **Licentia**
**Patent-Verwaltungs-GmbH**
**Theodor-Stern-Kai 1**
**W-6000 Frankfurt/Main 70 (DE)**

(72) Erfinder : **BÖHM, Harald**
**Auf der Platt 38**
**W-6246 Glashütten 1 (DE)**

(74) Vertreter : **Amersbach, Werner, Dipl.-Ing. et al**
**Licentia Patent-Verwaltungs-GmbH**
**Theodor-Stern-Kai 1**
**W-6000 Frankfurt 70 (DE)**

EP 0 441 870 B1

## Beschreibung

Die Erfindung bezieht sich auf eine Akkumulatorzelle mit einer bei Arbeitstemperatur festen, positiven Elektrode mit einer aktiven Masse aus einem Übergangsmetall und Natriumchlorid und aus Kohlenstoff für einen Natrium-Metallchlorid Akkumulator mit einen natriumionenleitenden Festelektrolyten und einem schmelzflüssigen Elektrolyten.

Eine neue Möglichkeit zur effizienten Energiespeicherung in Sekundärbatterien bietet die Natrium/Metallchloridbatterie, die bei R.M. Dell, R.J. Bones, Proc. 22nd IECEC 1987, pages 1072 - 77, R.C. Galloway, Jornal of the Electrochemical Society 134 (1987) 256, R.J. Bones et al, Jornal of the Electrochemical Society 134 (1987) 2379, ausführlich beschrieben ist. Als Metallchloride können $FeCl_2$, $CoCl_2$ und $NiCl_2$ eingesetzt werden. Wegen der hohen Ruhespannung von 2,59 Volt ist das System mit $NiCl_2$ besonders geeignet.

In der Zelle läuft die Reaktion

$$2\ Na\ +\ NiCl_2 \quad \overset{\text{Entladen}}{\underset{\text{Laden}}{\rightleftharpoons}} \quad 2\ NaCl\ +\ Ni$$

ab. Ein weiterer Vorteil dieser Stoffkombination ist ein weiter Temperaturbereich, der während des Betriebs zulässig ist: 270 °C - 400 °C. Dadurch sind hohe Leistungen während des Entladens möglich, ohne dass die Temperaturgrenzen wegen der Verlustleistung aufgrund des inneren Widerstandes rasch erreicht werden.

Während der Reaktion (Laden und Entladen) findet in der positiven Elektrode (Ni/$NiCl_2$) eine Stoffumwandlung statt. Dabei wird beim Laden aus Nickel das nicht leitfähige Nickelchlorid gebildet. Das bedeutet, dass der Aufbau der Festelektrode so gestaltet werden muss, dass die elektronische Leitfähigkeit von der Reaktionsstelle innerhalb den positiven Elektrode zum positiven Pol der Zelle permanent gewährleistet sein muss.

Auf der anderen Seite muss die reagierende Masse im ständigen Kontakt mit deren schmelzflüssigen Elektrolyten bleiben, um den Ab- bzw. Antransport der Na+-Ionen sicherzustellen. Dies wird realisiert durch Verwendung von porösen positiven Elektroden, in die der Elektrolyt aufgesaugt ist.

Als Elektrodenstrukturen haben sich Pulverschüttungen, Granulatschüttungen oder Sinterkörper bewährt.

Da nicht das gesamte Metall (z. B. Nickel) in nichtleitendes Metallchlorid (z. B. $NiCl_2$) überführt werden darf - dies würde die Funktionsfähigkeit der Elektrode unterbinden - wird ein erheblicher Überschuss an Nickel eingesetzt (Ca Faktor 3 der stöchiometrischen Menge). Dadurch wird die Elektrodenfunktion während des gesamten Lade- und Entladezyklus aufrechterhalten und die Beteiligung des gesamten Elektrodenvolumens an der Reaktion gesichert.

Nachteil dieser Anordnung ist die grosse Metallmenge, die pro kWh Speicherkapazität eingesetzt werden muss (z. B. 423 g Ni/kWh Batterie theoretisch; ca. 1300 g Ni/kWh praktisch).

Nickel ist kein billiger Werkstoff; deshalb verteuert (stärker als bei Eisen) der überstöchiometrische Nickeleinsatz den kWh-Preis der Batterie beträchtlich. Dadurch wird die Konkurrenzfähigkeit dieser Hochenergiebatterie gegenüber heutigen marktgängigen Batterien wie z. B. einer Bleibatterie erheblich beeinträchtigt. Ein weiterer Aspekt ist das überschüssige Gewicht, das durch den überstöchiometrischen Nickelanteil (spez. Gewicht 8,9 g/$cm^3$) verursacht wird. Für spezielle Anwendungen, z. B. in der Traktion, sind hohe spezifische Energie- und Leistungswerte (Wh/kg bzw. W/kg) unerlässlich. Für Elektroautos müssen Werte von über 100 W/kg erreicht werden, um ausreichende Reichweiten des Fahrzeuges zu garantieren. Durch das überschüssige Metall werden die spezifischen Daten erheblich verschlechtert.

In DE 3245812 wird vorgeschlagen, die aktive Masse in eine elektronisch leitfähige Matrix einzubringen. Diese Matrix kann jede geeignete elektronisch leitfähige Substanz sein. Dabei wird Kohlenstoff in Form von Graphit vorgeschlagen. Es wird weiter erwähnt, dass neben Formkörpern, die die Matrix bilden, die aktive Substanz, das Metallchlorid, mit Graphit gemischt werden kann und die Kathode als Artifakt aus dem Gemisch gepresst werden kann. Bei Verwendung eines porösen Matrixkörpers kommt es darauf an, die Porösitäten so zu wählen, dass der Zutritt des natriumionenleitenden Elektrolyten zu allen Stellen der Matrix gegeben ist und eine Umsetzung stattfinden kann. Dies bedeutet aber auch, dass in den engen Poren die Diffusion im Elektrolyten gehemmt ist. Weiter verhindert der Matrixkörper durch seine fest vorgegebene Geometrie einen einfachen Herstellungsprozess zum Aufbau der Zellen. Wenn Pulvermischungen von aktiver Masse und Kohlenstoff vorgegeben werden, so liegen die aktiven Teilchen neben den Kohlenstoffteilchen. Beim Laden bildet sich nun auf den Metallpartikelchen das Chlorid, das nicht leitend ist. Dadurch überzieht sich das Metallpartikelchen auch bei Vorhandensein der Kohlepartikelchen mit einer nicht leitenden Schicht, so dass die Reaktion wegen des fehlenden elektrischen Kontaktes an dieser Stelle zum Stillstand kommt, d. h. im Inneren des aktiven Partikels liegt ungenutzte Masse vor und trägt somit zu einer Verschlechterung der spezifischen Energiedichten bei. Weiter wurde beobachtet, dass es bei dieser Form der positiven Elektrode während der Lade/Entladezyklen zu einem Kornwachstum der Metall/Metallchloridpartikel kommt. Dadurch wird einerseits die Strombelastbarkeit, d. h. die Leistung der Elektrode geringer, andererseits nimmt mit den Lade/Entladezyklen die Kapazität der Elektrode ab, da die aktive Masse wegen des Kornwachstums immer weniger ausgenutzt werden kann.

Aufgabe der Erfindung ist es daher, für einen Natrium-Metallchlorid-Akkumulator der eingangs beschriebenen Art eine positive Elektrode zu entwickeln, die bei einem geringen überstöchiometrischen Anteil an Metall eine hohe elektrische Leitfähigkeit besitzt und die Nachteile der oben beschriebenen Elektroden nicht aufweist.

Die Aufgabe wird dadurch gelöst, dass gemäß Anspruch 1 die positive Elektrode aus Kohlepartikeln, die mit Übergangsmetall überzogen sind (entladener Zustand) gebildet wird. In einer derartigen Elektrode wird die aktive Komponente der Elektrode, in diesem Fall das Metall, im entladenen bzw. das Metallchlorid im geladenen Zustand, weitgehend ausgenutzt, wobei die elektronische Leitfähigkeit weitgehend von den Kohlepartikeln, die den Träger darstellen, gewährleistet wird, da die Metall/Metallchloridsnicht auf dem Kohlepartikelchen nicht gleichmässig dicht, sondern durchbrochen ist. Auf diese Art und Weise ergibt sich eine erhebliche Gewichtskosteneinsparung bei der Batterie.

Kohle in seinen vielfältigen Formen ist nicht nur leicht (spez. Gewicht 1,8 - 2 g/cm³) sondern auch preiswert. Kohle weist ausreichende Leitfähigkeit auf und ist in dem betrachteten System der Na/Metallchlorid-Zelle auch ausreichend stabil.

Kohle wird vorwiegend als Kohlepulver (Graphit als auch partiell kristallisierter Kohlenstoff) angewandt. Die positive Elektrode wird vorzugsweise im entladenen Zustand hergestellt, d. h. die Elektrode wird aus Kohlepartikeln, die einen Metallüberzug besitzen und Natriumchlorid gefertigt. Als Träger kann Kohlematerial in verschiedener Form eingesetzt werden. Es kann Kohlegraphitpulver verwendet werden, es können aber auch grössere Kohlepartikel, die in sich wiederum eine Porösität aufweisen, eingesetzt werden. Diese Kohlekörper, egal welche Korngrösse, werden mit einem Überzug des Metalls, z. B. Nickel, versehen. Die Kohle/Nickelpartikeln werden mit trockenem Kochsalzpulver gemischt und in die Zelle eingerüttelt. Danach wird diese Elektrode mit schmelzflüssigem Elektrolyten getränkt. Anschliessend wird die Zelle verschlossen und kann geladen werden. Die Mischung aus den Kohle/Nickelkörnern und Kochsalz kann zuerst granuliert und anschliessend als Granulat in die Zellen gefüllt werden. Dies hat den Vorteil, dass die Mischung besser rieselfähig und die Gefahr der Entmischung beim Einfüllen geringer ist. Bei dieser Elektrodenart wird der Metallanteil (Nickelanteil) nahezu vollständig während, des Lade/Entladezyklusses ausgenutzt. Ein Überstöchiometriefaktor von 1,2 - 1,5 für das Metall hat sich gut bewährt. Als Kohlepulver sind Griesse aus Kohlenstoff oder Elektrographit mit Korngrössen zwischen 2 und 3000 µm geeignet. Entsprechend der Korngrösse der Kohlekörner variiert die Dicke des Nickelüberzuges. So werden auf Kohlekörner mit einem Korndurchmesser von ca. 1 mm Nickelschichten in der Grössenordnung von 100 µm aufgebracht. Bei Kohlekörner mit einem Korndurchmesser von 0,3 mm ergeben sich Nickelschichtdicken zwischen 1 und 10 µm.

Im entladenen Zustand der Zelle liegt die aktive Komponente als Metall vor, d. h. auf den Kohlekörnern befindet sich der metallische Überzug. Beim Laden wird dieser Überzug in das Metallchlorid überführt. Im Beispiels des Nickels bedeutet das, dass im entladenen Zustand Nickel auf Kohle hervorliegt, im geladenen Zustand Nickelchlorid auf kohle. Dabei ist es selbstverständlich, dass aufgrund des überschusses nicht die gesamte Nickelmenge in Nickelchlorid überführt wird. Bei der Entladung wird dagegen das Nickelchlorid weitgehend, aber zwangsweise nicht vollständig, in Nickel umgewandelt. Da dieses System im entladenen Zustand gefertigt werden kann, gestaltet sich der Bau der Zellen sehr einfach. Wie bereits erwähnt werden die Kohlekörner mit dem Nickelüberzug mit Kochsalz gemischt und in die Zelle eingefüllt.

Die Aufbringung des Metalls auf den Kohleträger wird nach bekannten Verfahren durchgeführt. Im einzelnen sind zu nennen Abscheidungen aus der Gasphase mit dem Verfahren Chemical Vapour Deposition oder Sputtern, sowie Abscheidung aus Lösungen. Hier kommen in erster Linie elektrochemische Verfahren in Frage, wobei die stromlose Vernickelung als auch die Vernickelung unter Stromanwendung geeignet sind. Weiterhin ist auch das Ausfallen von Nickelverbindungen auf der Kohle möglich. Diese Nickelverbindungen werden anschliessend bei 300 - 400 °C mit Wasserstoff reduziert. In allen Fällen resultiert ein Kohlematerial, auf dessen Oberfläche das Metall in unserem Beispiel Nickel abgeschieden ist.

Das folgende Beispiel dient der Erläuterung der Erfindung für eine Zelle, die eine kapazität von ca. 40 Ah besitzen soll, werden 100 g der Kohle/Nickelpartikel eingesetzt. Diese 100 g kohle/Nickelpartikel enthalten 50 g Nickel abgeschieden auf 50 g Kohlepartikel. Die Korngrösse der Kohle/Nickelpartikel liegt in der Grössenordnung 300 - 500 µm. Je 100 g Kohle/Nickelpartikel werden gleichmässig mit ca. 100 g Natriumchlorid vermischt und die Mischung in den für die positive Elektrode vorgesehenen Raum der Akkumulatorzelle eingefüllt. Nach Hinzufügen des schmelzflüssigen Elektrolyten Natriumaluminiumchlorid kann die Zelle verschlossen und geladen werden. Eine Natrium-Metallchlorid-Akkumulatorzelle ist schematisch im Querschnitt in einer Zeichnung dargestellt.

Eine Natrium-Metallchlorid-Akkumulatorzelle 1 enthält ein Gehäuse 2, das als negative Elektrode einen Anschluss 3 aufweist. Im Inneren des Gehäuses 2 befindet sich im Abstand von den Wänden ein Festelektrolyt 4.

Im Raum zwischen den Gehäuseinnenwänden und der Aussenseite des Festelektrolyten 4 befindet sich flüssiges Natrium. In das Innere des Festelektrolyten 4 ragt eine Ableitelektrode 5 aus elektrisch leitendem Material. Die Ableitelektrode ist von der positiven Elektrode 6 zumindest teilweise umgeben. Die positive Elektrode besteht aus der aktiven Masse Metall und Natriumchlorid, wobei das Metall auf dem kohleträger abgeschieden ist.

Ergänzend ist zu erwähnen, dass als Träger für die aktive Metallkomponente nicht nur Kohlepartikel eingesetzt werden können, sondern der Kohlenstoff in anderer Form, z. B. Faserstruktur, ebenfalls geeignet ist. Hierbei wird das Metall, wie im Beispiel angeführt, also Nickel, auf den Kohlefasern abgeschieden. Diese fasrigen Kohlematerialien mit dem Metallüberzug werden ebenfalls mit der entsprechenden Menge Natriumchlorid versehen. Das Natriumchlorid kann in das fasrige Kohlematerial eingerüttelt werden. Es kann aber auch aus Lösungen ausgefällt werden. Das fasrige Kohlematerial mit dem Metallüberzug und das Nickelchlorid stellen die positive Masse dar. Die positive Masse wird in den für die positive Elektrode vorgesehenen Raum der Akkumulatorzelle eingebracht. Nach Zugabe der vorgesehenen Menge Natrium- Aluminiumchlorid kann diese Zelle verschlossen und geladen werden.

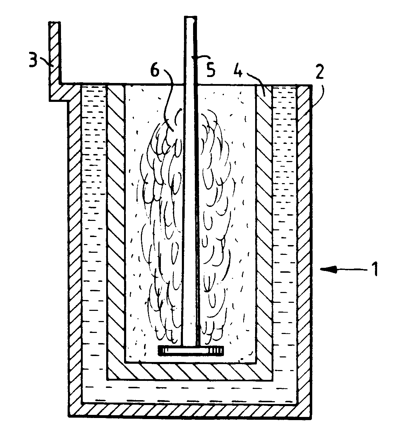

## Patentansprüche

1. Verfahren zur Herstellung einer Natrium-Metallchlorid-Akkumulatorzelle mit einem natriumionenleitenden Festelektrolyten, sowie einem schmelzflüssigen Elektrolyten und einer bei Arbeitstemperatur festen, positiven Elektrode mit einer aktiven Masse aus einem Übergangsmetall und Natriumchlorid und aus Kohlenstoff, dadurch gekennzeichnet,
   - daß die Akkumulatorzelle im entladenen Zustand hergestellt wird,
   - daß im entladenen Zustand das Übergangsmetall der aktiven Masse als Überzug auf den Kohlenstoff aufgebracht wird, und
   - daß als aktive Masse ein Material verwendet wird, das die 1,2 bis 1,5 fache Menge Metall bezogen auf die stöchiometrischen Verhältnisse enthält.

2. Verfahren nach Anspruch 1, dadurch gekennzeichnet, daß das Metall der aktiven Masse auf dem Kohlenstoff elektrochemisch abgeschieden wird.

3. Verfahren nach Anspruch 1, dadurch gekennzeichnet, daß das Metall der aktiven Masse auf dem Kohlenstoff durch Reduktion aus einer Metallverbindung gebildet wird.

4. Verfahren nach Anspruch 1, dadurch gekennzeichnet, daß das Metall der aktiven Masse durch Sputtern auf den Kohlenstoff aufgebracht wird.

5. Verfahren nach Anspruch 1, dadurch gekennzeichnet, daß das Metall der aktiven Masse durch Chemical Vapour Deposition (CVD) auf den Kohlenstoff aufgebracht wird.

6. Im entladenen Zustand hergestellte Natrium-Metallchlorid-Akkumulatorzelle mit einem natriumionenleitenden Festelektrolyten, sowie einem schmelzflüssigen Elektrolyten, und einer bei Arbeitstemperatur festen, positiven Elektrode mit einer aktiven Masse aus einem Übergangsmetall und Natriumchlorid und aus Kohlenstoff nach einem der vorhergehenden Ansprüche, dadurch gekennzeichnet, daß im entladenen Zustand das Übergangsmetall als Überzug auf dem Kohlenstoff angeordnet ist, und daß das Metall der aktiven Masse die 1,2 bis 1,5fache Menge Metall bezogen auf stöchiometrische Verhältnisse enthält.

7. Natrium-Metallchlorid-Akkumulatorzelle nach Anspruch 6, dadurch gekennzeichnet, daß im geladenen Zustand Übergangsmetallchlorid als Überzug auf dem Kohlenstoff angeordnet ist.

8. Natrium-Metallchlorid-Akkumulatorzelle nach einem oder mehreren der vorhergehenden Ansprüche, dadurch gekennzeichnet, daß der Kohlenstoff Grießform hat.

9. Natrium-Metallchlorid-Akkumulatorzelle nach einem oder mehreren der Ansprüche 1 bis 7, dadurch gekennzeichnet, daß der Kohlenstoff Partikelform hat, wobei die Partikel Abmessungen zwischen 2 und

3000μm haben.

10. Natrium-Metallchlorid-Akkumulatorzelle nach einem oder mehreren der Ansprüche 1 bis 7, dadurch gekennzeichnet, daß der Kohlenstoff im Form einer Faserstruktur vorliegt.

## Claims

1. Process for the manufacture of a sodium metal chloride storage battery cell with a sodium-ion-conducting solid electrolyte, as well as a fusible electrolyte and a positive electrode, which is solid at working temperature, with an active mass of a transition metal and sodium chloride and of carbon, characterised thereby
   - that the storage battery cell is manufactured in the discharged state,
   - that in the discharged state the transition metal of the active mass is applied as a coating on the carbon, and
   - that a material, which contains 1.2 to 1.5 times the quantity of metal with respect to the stoichiometric ratio, is used as active mass.

2. Process according to claim 1, characterised thereby that the metal of the active mass is electrochemically discharged onto the carbon.

3. Process according to claim 1, characterised thereby that the metal of the active mass is formed on the carbon by reduction from a metal compound.

4. Process according to claim 1, characterised thereby that the metal of the active mass is applied to the carbon by sputtering.

5. Process according to claim 1, characterised thereby that the metal of the active mass is applied to the carbon by chemical vapour deposition (CVD).

6. Sodium metal chloride storage battery cell, which is manufactured in the discharged state, with a sodium-ion-conducting solid electrolyte, as well as a fusible electrolyte, and a positive electrode, which is solid at working temperature, with an active mass of a transition metal and sodium chloride and of carbon, according to one of the preceding claims, characterised thereby that in the discharged state the transition metal is arranged as a coating on the carbon, and that the metal of the active mass contains 1.2 to 1.5 times the quantity of metal with respect to the stoichiometric ratio.

7. Sodium metal chloride storage battery cell according to claim 6, characterised thereby that in the discharged state transition metal chloride is arranged on the carbon as a coating.

8. Sodium metal chloride storage battery cell according to one or several of the preceding claims, characterised thereby that the carbon has the form of grit.

9. Sodium metal chloride storage battery cell according to one or several of the claims 1 to 7, characterised thereby that the carbon has particulate form, wherein the particles have dimensional sizes between 2 and 3000 microns.

10. Sodium metal chloride storage battery cell according to one or several of the claims 1 to 7, characterised thereby that the carbon is present in the form of a fibrous structure.

## Revendications

1. Procédé de fabrication d'une cellule d'accumulateur au chlorure double de sodium et de métal, comportant un électrolyte solide conducteur des ions sodium, ainsi qu'un électrolyte liquide en fusion et qu'une électrode positive, solide à la température de travail, avec une masse active constituée d'un métal de transition et de chlorure de sodium et de carbone, procédé caractérisé par le fait:
   - que la cellule de l'accumulateur se fabrique à l'état déchargé,
   - qu'à l'état déchargé on rapporte le métal de transition de la masse active sous forme de revêtement

5

sur le carbone et

- que comme masse active on emploie un matériau qui contient le métal dans une proportion supérieure de 1,2 à 1,5 fois à la proportion stœchiométrique.

2. Procédé selon la revendication 1, caractérisé par le fait que le métal de la masse active se dépose sur le carbone par voie électrochimique.

3. Procédé selon la revendication 1, caractérisé par le fait que le métal de la masse active se forme sur le carbone par réduction à partir d'une liaison métallique.

4. Procédé selon la revendication 1, caractérisé par le fait que le métal de la masse active est rapporté sur le carbone par métallisation sous vide.

5. Procédé selon la revendication 1, caractérisé par le fait que le métal de la masse active est rapporté sur le carbone par dépôt en phase vapeur (CVD).

6. Cellule d'accumulateur au chlorure double sodium-métal, réalisée à l'état déchargé et comportant un électrolyte solide conducteur des ions sodium, ainsi qu'un électrolyte liquide en fusion et qu'une électrode positive, solide à la température de travail, avec une masse active constituée d'un métal de transition et de chlorure de sodium et de carbone, selon l'une des revendications précédentes, caractérisée par le fait qu'à l'état déchargé c'est le métal de transition qui est disposé comme revêtement sur le carbone et par le fait que le métal de la masse active contient une quantité de métal correspondant à une proportion supérieure, de 1,2 à 1,5 fois, à la proportion stœchiométrique.

7. Cellule d'accumulateur au chlorure double sodium-métal selon la revendication 6, caractérisée par le fait qu'à l'état chargé c'est le chlorure du métal de transition qui est disposé sous forme de revêtement sur le carbone.

8. Cellule d'accumulateur au chlorure double sodium-métal selon l'une ou plusieurs des revendications précédentes, caractérisée par le fait que le carbone se présente sous forme de menus.

9. Cellule d'accumulateur au chlorure double sodium-métal selon l'une ou plusieurs des revendications 1 à 7, caractérisée par le fait que le carbone se présente sous forme de particules, les particules ayant des dimensions entre 2 et 3000 $\mu$m.

10. Cellule d'accumulateur au chlorure double sodium-métal selon l'une ou plusieurs des revendications 1 à 7, caractérisée par le fait que le carbone se présente sous forme d'une structure fibreuse.